# EUROPEAN PATENT SPECIFICATION

(11) **EP 3 499 139 B1**
(45) Date of publication and mention of the grant of the patent: **07.10.2020**
(21) Application number: 17201331.0
(22) Date of filing: 12.12.2017
(51) Int. Cl.: F24F 3/044, F24F 7/00, F24F 13/10, F24F 7/08, F24F 11/33, E04F 13/07, F24F 13/02, F24F 7/04, F24F 5/00, E04B 2/88, E04F 17/04, E04F 13/08, E04F 13/00

(54) **AN EXTERNAL FACADE CLADDING SYSTEM**
ÄUSSERES FASSADENVERKLEIDUNGSSYSTEM
SYSTÈME DE REVÊTEMENT DE FAÇADE EXTERNE

(43) Date of publication of application: 19.06.2019
(73) Proprietor: Baser, Ercan, Ankara (TR)
(72) Inventor: Baser, Ercan, Ankara (TR)
(74) Representative: Kayahan, Senem

(56) References cited:
- EP-A1- 3 220 068
- EP-A2- 0 132 723
- CN-U- 206 245 530
- CN-Y- 201 296 986
- DE-A1- 4 116 995
- KR-B1- 100 785 400

## Description

### Technical Field

The present invention relates to a single or double skin external facade cladding system which has been developed for heating/cooling and ventilation functions of buildings and which, in addition to such functions thereof, can also perform the function of coating external facades.

### Background of the Invention (Prior Art)

In the state of the art, there exist systems such as a double-skin facade, ventilated facade, and solar wall which are used in external facade cladding of buildings and in performing natural ventilation or saving heating-ventilation energy.

The systems referred to as double-skin facades and ventilated windows-facade are mostly directed to energy saving and improvement of environment comfort based on the principles of utilization of natural ventilation and solar energy. Generally, in these systems, efforts have been made to find an economic solution to ventilation function by passing the indoor or outdoor air through a gap formed in the external facade of the building, and also to reduce thermal losses and increase the acoustic performance of the building by forming a thermal zone on the external facade of the building. Such systems operate independent of the central heating, cooling and air-conditioning systems of the building; therefore, they do not reduce the installation costs of central systems. Moreover, their costs are very high when compared to conventional external facade cladding systems and they cannot meet the heating-cooling requirement of the building, but they can only partly meet the ventilation requirement. In addition to this, they reduce the building space and increase the operating/maintenance/cleaning costs since they need larger space than conventional facade cladding systems. Patent document DE4116995 describes a ventilated double-skin facade system comprising an interior skin, an interior wall panel and an external wall panel, a vertical profile, a horizontal profile and ventilation vents located in the profiles.

### Summary and Objects of the Invention

With the present invention, the distances between conventional curtain wall panels are increased, passage grilles are provided on horizontal profiles; thus, the skin allowing air passage throughout the interior wall or external facade of the building have been formed. The air used for heating or cooling the environment is passed through one of these passages. Said air permits heating or cooling of the interior wall surface, thereby being capable of performing heating/cooling through the wall. Further, the fresh air need of the building is met using some of the air inside the interior skin.

The exhaust air of the building, on the other hand, is discharged from another passage formed along the facade; in the meantime, the thermal losses and gains in the building heat are reduced by forming a thermal zone in the external facade of the building. Moreover, saving on fan energy is achieved because the polluted air is exhausted in the shortest way possible.

Thanks to the configuration of the invention, the mechanical installations of the building are also completed to a large extent while the external facade cladding application is being performed.

It has been aimed by developing the external facade cladding system according to the invention to:
- Use the external facade cladding system as a ventilation system, heat recovery system and heating/cooling equipment as well,
- Prevent fires, which are experienced frequently in external facade cladding systems, by utilizing the duct of the facade, which is typically used as air gap, also as a gas extinguishing system when required.
- Make use of the waste energy of the exhaust air of the building,
- Reduce thermal losses and gains, and thus reduce the heating/cooling costs of the building by decreasing the heating and cooling regime temperatures of the buildings (a temperature regime of 27°C-32°C for heating, and of 20°C -25°C for cooling),
- Save on building energy costs by allowing the use of heat pumps which are capable of heating at very high efficiency, especially in low heating regimes,
- In the case of using ground-air heat exchanger, discharge the air heated or cooled underground by passing such air through the external facade skin of the building, and thus both reducing the heating/cooling costs of the building and making the ground-air heat exchanger systems more feasible by solving the hygiene problem of such systems.
- Be able to perform heating in one facade while performing cooling at another during transitional seasons owing to the capability of heating/cooling the building at four different facades,
- Save on energy by meeting the heating energy requirement of the facade that needs to be heated from the energy of the facade that needs to be cooled during transitional seasons thanks to the fact the air at one facade of the building can be transferred to other facades,
- Avoid "sick building syndrome", which is frequently experienced in buildings with high ventilation requirement, by meeting the ventilation requirement through the cleanest and shortest ducts, and
- Heat the facade at low temperatures during the construction in regions where the winter is too cold to continue building construction, and thus to continue constructional works inside the building.

### Description of the Drawings

The drawings and related descriptions for a better understanding of the external facade cladding system having been developed with the present invention are given below.
**Fig. 1** **:** Schematic view of the double skin system.
**Fig. 2****:** Schematic view of the single skin-system.
**Fig. 3****:** Perspective view showing the single skin system while the exhaust gas is being discharged.
**Fig. 4****:** Perspective view showing the single skin-system while the air is being taken to the indoor environment.
**Fig. 5****:** Perspective view showing the double skin-system while the exhaust gas is being discharged and the air is being taken to the indoor environment.
**Fig. 6****:** Cross-sectional view of the horizontal profile of the facade system.

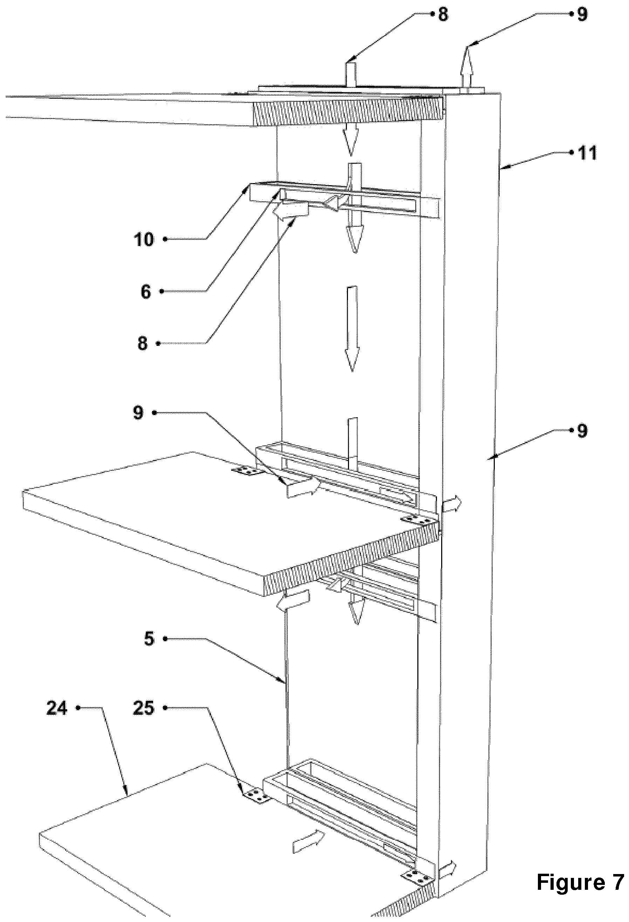

**Fig. 7****:** Cross-sectional view of the vertical profile of the facade system.

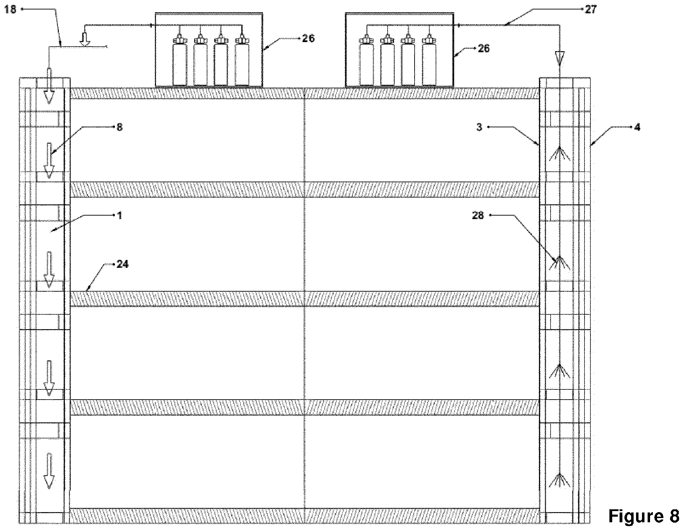

**Fig. 8****:** Schematic view showing the facade system together with the gaseous fire-extinguishing system.

### Description of the Part References

The parts and components given in the drawings for a better description of the external facade cladding system developed with the present invention are enumerated individually and the reference numerals corresponding thereto are explained below.
**1.** Interior skin
**2.** External skin
**3.** Interior wall panel
**4.** External wall panel
**5.** Intermediate panel
**6.** Upper vent
**7.** Lower vent
**8.** Supply air
**9.** Suction air
**10.** Horizontal profile
**11.** Vertical profile
**12.** Air passage grille
**13.** Vent damper
**14.** Central heating-cooling-air-conditioning system
**15.** Radiant heating/cooling direction
**16.** Exhaust aspirator
**17.** Air-conditioning plant
**18.** Ventilation ducts
**19.** Air regulating damper
**20.** Junction box
**21.** Underground pipe system
**22.** Ground-air heat exchanger system
**23.** Underground air
**24.** Building floor
**25.** Bracket
**26.** Gaseous fire-extinguishing system
**27.** Gaseous fire-extinguishing system piping
**28.** Gaseous fire-extinguishing system nozzle

### Detailed Description of the Invention

The single or double skin external facade system according to the invention basically comprises:
- An interior skin (1) used as an air gap along the facade,
- In the double skin embodiment, an external skin (2) used for forming a second air gap,
- An interior wall panel (3) in the section facing the indoor environment,
- An external wall panel (4) in the section facing the outdoor environment,
- In the double skin embodiment, an intermediate panel (5) between the interior wall panel (3) and the external wall panel (4),
- A horizontal profile (10) in which the upper vent (6) and the lower vent (7) are located,
- A vertical profile (11) supporting the facade panels,
- An upper vent (6) which is located inside the horizontal profile (10) on the upper section of the interior wall panel (3) and which can be used for supply or exhaust purposes,
- A lower vent (7) which is located inside the horizontal profile (10) on the lower section of the interior wall panel (3) and which can be used for supply or exhaust purposes,
- A vent damper (13) which allows regulating the flow rate of the supply air (8) or suction air (9),
- A central heating-cooling and air-conditioning system (14) to which the supply air (8) or suction air (9) is transferred,
- Ventilation ducts (18) that deliver the supply air (8) to the central heating-cooling and air-conditioning system (14),
- An air regulating damper (19) which regulates the air flow rate within a center heating-cooling and air-conditioning system (14),
- A junction box (20) which connects the ventilation ducts (18) to the interior skin (1) or external skin (2) of the facade,
- A gaseous fire-extinguishing system (26) which, in the event of fire, supplies fire extinguishing gas or fire extinguishing agents into the interior skin (1) and external skin (2) used as air gap along the facade, and
- A ground-air heat exchanger system (22) which, in case of ground based embodiment, enables the outdoor air to be heated or cooled underground.

According to the application mode of the invention, the external wall panel (4) of the curtain wall may be a curtain wall panel made of glass, double glazing, metal or composite material.

According to the application mode of the invention, the interior wall panel (3) of the curtain wall in the section of the system facing the interior wall can be made of glass, metal, composite material.

The intermediate panel (5) which may be made of metal, glass or plastic separates the interior skin (1) from the external skin (2), and thus the air passing through the interior skin (1) from the air passing through the external skin (2).

The lower vent (7) and the upper vent (6) are positioned inside the horizontal profile (10) and they may be provided with or without a vent damper (13).

In the double-skin embodiment, the vertical profile (11) is provided therein with holes that allow air passage. Thus, the suction air (9) is delivered to the external skin (2) without mixing with the air passing through the interior skin (1).

The central heating-cooling and air-conditioning system (14) which may be arranged at the rooftop or an appropriate floor of the building allows supplying air at a suitable pressure and temperature for the skins (1 and 2) and exhausting the suction air.

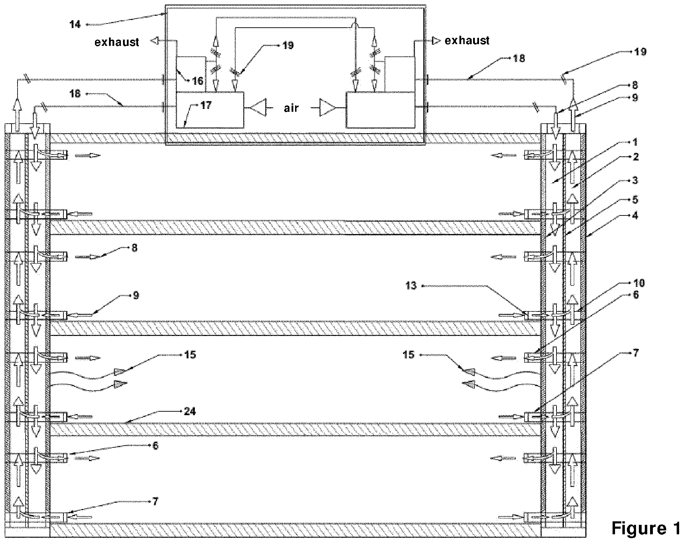

In the system schematically shown in Fig. 1, the air is heated or cooled in the central heating-cooling and air-conditioning system (14) and delivered to the interior skin (1) after being pressurized. While passing through the interior skin (1), the supply air (8) heats or cools the interior wall panel (3), thereby performing radiant heating/cooling (15) of the indoor environment through the wall. The suction air (9), on the other hand, passes through the lower vent (7) and is delivered to the external skin (2) by means of the negative pressure formed at the external skin (2). The air absorbed by the exhaust aspirator (16) is delivered to the air-conditioning plant (17) at a desired rate by way of the dampers (19) and the remaining amount is exhausted to the outdoor air. The fresh air at a rate equal to the suction air (9) exhausted to the outdoor air is taken from the outside by the air-conditioning plant (17) and then delivered to the interior skin (1) as supply air (9). Hence, air circulation at the desired amount and temperature in the facade is ensured.

If desired, the air heated/cooled in the air-conditioning plant (17) may be supplied to the indoor environment by way of the upper vent (6). As a result, the fresh air need of the environment is met.

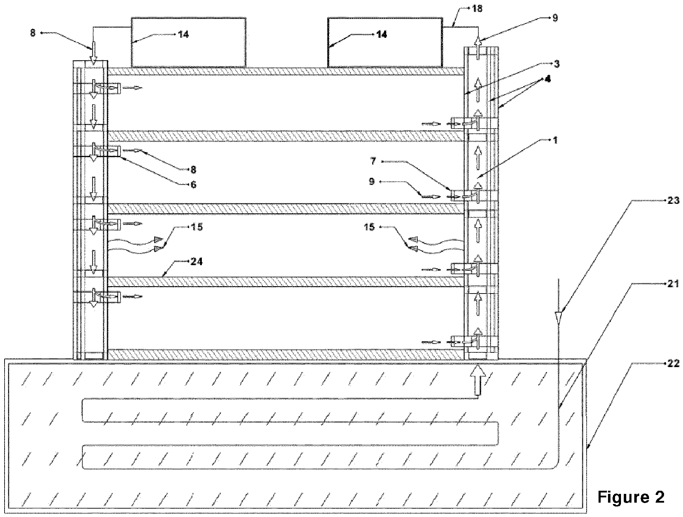

As shown in Fig. 2, the supply air and the suction air (9) may be circulated throughout the double skin facade as well as being circulated throughout the single skin facade. In the single skin facade, only suction air (9) or supply air (8) is present in the interior skin in a row throughout the facade; on the other hand, supply air (8) is present in the interior skin (1) while suction air (9) is present in the external skin (2) in a row of the double skin facade. The configuration of the system may vary according to the thermal needs of the building and climate conditions.

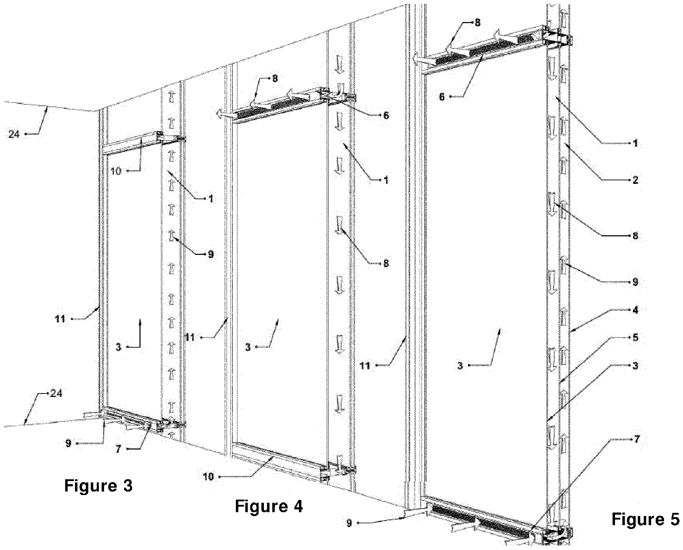

In Fig. 3, the single skin and double skin embodiments are illustrated side by side.

Since the air coming from different facades is delivered to the central heating-cooling and air-conditioning system (14), the system is capable of assessing the temperatures between the facades. Thus, the problems like different thermal requirements in the sections facing different facades, especially during transitional seasons, can be overcome. Particularly in glass facade buildings, significant thermal difference occurs between the south and north facades of the building during transitional seasons. While "cooling" requirement is formed in the sections of the building facing the south facade, "heating" requirement may occur in the sections facing the north. In this case, while the system continues operating as described above, the suction air (9) coming from a facade can be delivered to the air-conditioning plant (17) of the other facade by means of the dampers (19) and such air can be used for heating or cooling of the supply air (8) of that facade. For instance, the heated air in the south facade in which cooling is performed is delivered to the air-conditioning plant (17) serving for the north facade in which heating is required, but not to the plant serving for the south facade. Similarly, the cooled air in the north facade is delivered to the air-conditioning plant (17) serving for the south facade. As a consequence, a considerable amount of energy is saved and at the same time the systems such as 4-piped fan-coil units with very high investment and operating costs are no longer required.

Under appropriate conditions, the system is also suitable for utilizing underground heat. As seen in Fig. 2, the air heated or cooled underground can be delivered to the wall in which suction air (9) is present by means of the ground-air heat exchanger system (22). For example, the air temperature inside the facade which may rise up to 45-50°C especially in glass facade buildings during summer months can be cooled by means of the temperature of the underground air (23) which may be as low as 10-15°C, and thus saving on cooling costs at a considerable amount.

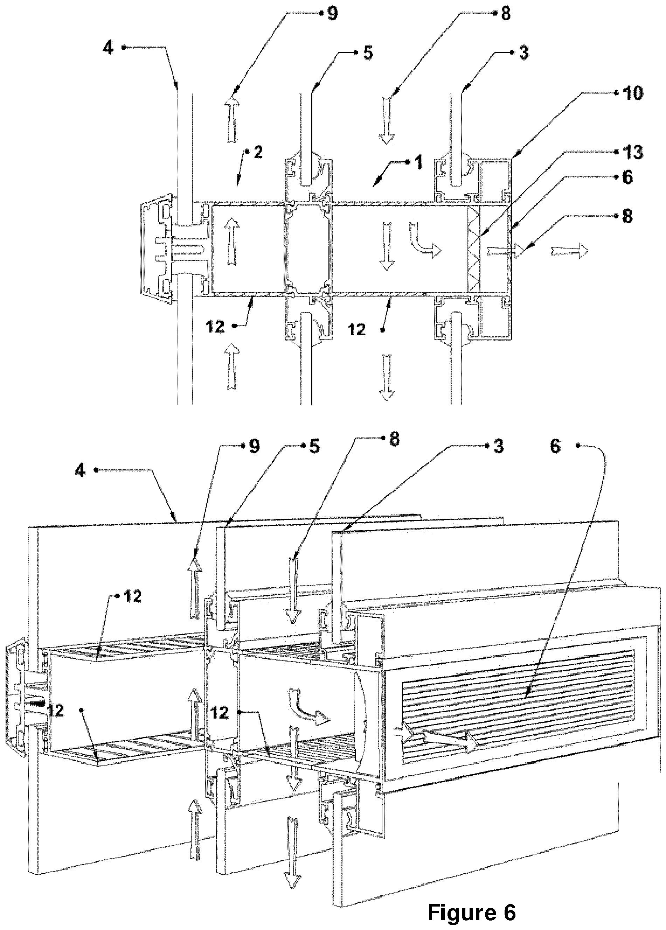

The system is also suited for fighting against facade fires in an efficient way. The airtight interior skin (1) and external skin (2) present an ideal and fast way for any kind of fire extinguishing gases. As seen in Fig. 6, facade fires can be prevented by delivering the fire extinguishing gas through ventilation ducts (18) or directly through the gaseous fire-extinguishing system piping (27), by means of the gaseous fire-extinguishing station (26).

## Claims

1. A single or double skin external facade cladding system, comprising:
• An interior skin (1) used as an air gap along the facade,
• In the double skin embodiment, an external skin (2) used for forming a second air gap,
• An interior wall panel (3) in the section facing the indoor environment,
• An external wall panel (4) in the section facing the outdoor environment,
• In the double skin embodiment, an intermediate panel (5) between the interior wall panel (3) and the external wall panel (4),
• A horizontal profile (10) in which an upper vent (6) and a lower vent (7) can be located,
• A vertical profile (11) supporting the facade panels, said cladding system **characterized by** further comprising:
• An upper vent (6) which is located inside the horizontal profile (10) on the upper section of the interior wall panel (3) and which can be used for supply or exhaust purposes,
• A lower vent (7) which is located inside the horizontal profile (10) on the lower section of the interior wall panel (3) and which can be used for supply or exhaust purposes,
• A vent damper (13) which allows regulating the flow rate of the supply air (8) or suction air (9),
• A central heating-cooling and air-conditioning system (14) to which the supply air (8) or suction air (9) is transferred,
• Ventilation ducts (18) that deliver the supply air (8) to the central heating-cooling and air-conditioning system (14),
• An air regulating damper (19) which regulates the air flow rate within a center heating-cooling and air-conditioning system (14), and
• A junction box (20) which connects the ventilation ducts (18) to the interior skin (1) or external skin (2) of the facade.

2. The single or double skin external facade cladding system according to Claim 1, **characterized in that** the external wall panel (4) of the curtain wall is a curtain wall panel made of glass, double glazing, metal or composite material according to the application mode of the invention.

3. The single or double skin external facade cladding system according to Claim 1, **characterized in that** the interior wall panel (3) of the curtain wall in the section of the system facing the interior wall is made of glass, metal, composite material according to the application mode of the invention.

4. The single or double skin external facade cladding system according to Claim 1, **characterized in that** it comprises an intermediate panel (5) which may be made of metal, glass or plastic and which allows separating the interior wall (1) from the external skin (2), and thus the air passing through the interior skin (1) from the air passing through the external skin (2).

5. The single or double skin external facade cladding system according to Claim 1, **characterized in that** the lower vent (7) and the upper vent (6) which are positioned inside the horizontal profile (10) are provided with or without a vent damper (13).

6. The single or double skin external facade cladding system according to Claim 1, **characterized in that** the single skin embodiment is configured such that only suction air (9) or supply air (8) will be present in the interior skin (1) in a row throughout the facade.

7. The single or double skin external facade cladding system according to Claim 1, **characterized in that** the double skin embodiment is configured such that supply air (8) will be present in the interior skin (1) while suction air (9) will be present in the external skin (2) in a row of the facade.

8. The single or double skin external facade cladding system according to Claim 1, **characterized in that** the system is configured such that the suction air (9) coming from a facade will be delivered to the air-conditioning plant (17) of the other facade by means of the dampers (19) in order to heat or cool the supply air (8) of that facade.

9. The single or double skin external facade cladding system according to Claim 1, **characterized in that** it comprises a gaseous fire-extinguishing system (26) which, in the event of fire, supplies fire extinguishing gas or fire extinguishing agents into the interior skin (1) and external skin (2) used as air gap along the facade.

10. The single or double skin external facade cladding system according to Claim 1, **characterized in that** it comprises a ground-air heat exchanger system (22) which, in case of ground based embodiment, enables the outdoor air to be heated or cooled with the underground heat.

## Patentansprüche

1. Ein- oder zweischaliges Außenfassadenverkleidungssystem, umfassend:
• Eine Innenschale (1), die als Luftspalt entlang der Fassade verwendet wird,
• Bei der zweischaligen Ausführung wird eine Außenhaut (2) zur Bildung eines zweiten Luftspalts verwendet,
• Eine Innenwandpaneel (3) in dem Abschnitt, der dem Innenraum zugewandt ist,
• Eine Außenwandpaneel (4) in dem Abschnitt, der dem Außenraum zugewandt ist,
• In der zweischaligen Ausführung ein Zwischenpaneel (5) zwischen dem Innenwandpaneel (3) und dem Außenwandpaneel (4),
• Ein horizontales Profil (10), in dem eine obere Entlüftungsöffnung (6) und eine untere Entlüftung (7) angeordnet werden können,
• Ein vertikales Profil (11), dass die Fassadenpaneele trägt, das besagte Verkleidungssystem **gekennzeichnet durch** weiteres Umfassen:
• Eine obere Entlüftungsöffnung (6), die sich innerhalb des horizontalen Profils (10) auf dem oberen Abschnitt des Innenwandpaneels (3) befindet, und die für Zu- oder Abluftzwecke verwendet werden kann,
• Eine untere Entlüftungsöffnung (7), die sich innerhalb des horizontalen Profils (10) am unteren Abschnitt des Innenwandpaneels (3) befindet, und die für Zu-oder Abluftzwecke verwendet werden kann,
• Eine Entlüftungsklappe (13), mit der die Durchflussrate der Zuluft (8) oder der Ansaugluft (9) reguliert werden kann,
• Ein zentrales Heizungs-, Kühlungs- und Klimatisierungssystem (14), dem die Zuluft (8) oder Ansaugluft (9) zugeführt wird,
• Lüftungskanäle (18), die die Zuluft (8) zum zentralen Heizungs-, Kühlungs-und Klimatisierungssystem (14) führen,
• eine Luftregelklappe (19), die die Luftdurchflussrate innerhalb eines Zentralheizungs-, Kühlungs- und Klimatisierungssystems (14) reguliert, und
• Ein Anschlusskasten (20), der die Lüftungskanäle (18) mit der Innenschale (1) oder Außenschale (2) der Fassade verbindet.

2. Ein- oder zweischalige Außenfassadenverkleidungssystem nach Anspruch 1, **dadurch gekennzeichnet, dass** das Außenwandpaneel (4) der Vorhangfassade ein Vorhangfassadenpaneel ist, das je nach Anwendungsmodus der Erfindung aus Glas, Doppelverglasung, Metall oder Verbundmaterial hergestellt ist.

3. Ein- oder zweischalige Außenfassadenverkleidungssystem nach Anspruch 1, **dadurch gekennzeichnet, dass** das Innenwandpaneel (3) der Vorhangfassade in dem der Innenwand zugewandten Teil des Systems aus Glas, Metall, Verbundwerkstoff entsprechend dem Anwendungsmodus der Erfindung hergestellt ist.

4. Ein- oder zweischalige Außenfassadenverkleidungssystem nach Anspruch 1, **dadurch gekennzeichnet, dass** das System eine Zwischenplatte (5) umfasst, die aus Metall, Glas oder Kunststoff bestehen kann und die es ermöglicht, die Innenwand (1) von der Außenschale (2) und somit die durch die Innenschale (1) strömende Luft von der durch die Außenschale (2) strömenden Luft zu trennen.

5. Ein- oder zweischalige Außenfassadenverkleidungssystem nach Anspruch 1, **dadurch gekennzeichnet, dass** die untere Entlüftungsöffnung (7) und die obere Entlüftungsöffnung (6), die innerhalb des horizontalen Profils (10) angeordnet sind, mit oder ohne Entlüftungsklappe (13) versehen sind.

6. Ein- oder zweischalige Außenfassadenverkleidungssystem nach Anspruch 1, **dadurch gekennzeichnet, dass** die einschalige Ausführung so konfiguriert ist, dass in der Innenschale (1) nur Ansaugluft (9) oder Zuluft (8) in einer Reihe über die gesamte Fassade verteilt vorhanden ist.

7. Ein- oder zweischalige Außenfassadenverkleidungssystem nach Anspruch 1, **dadurch gekennzeichnet, dass** die zweischalige Ausführung so konfiguriert ist, dass in der Innenschale (1) Zuluft (8) und in der Außenschale (2) in einer Fassadenreihe Ansaugluft (9) vorhanden ist.

8. Ein- oder zweischalige Außenfassadenverkleidungssystem nach Anspruch 1, **dadurch gekennzeichnet, dass** das System so konfiguriert ist, dass die von einer Fassade kommende Ansaugluft (9) mittels der Klappen (19) der Klimaanlage (17) der anderen Fassade zugeführt wird, um die Zuluft (8) dieser Fassade zu erwärmen oder zu kühlen.

9. Ein- oder zweischalige Außenfassadenverkleidungssystem nach Anspruch 1, **dadurch gekennzeichnet, dass** sie ein gasförmiges Feuerlöschsystem (26) umfasst, das im Brandfall Feuerlöschgas oder Feuerlöschmittel in die Innenschale (1) und die Außenschale (2) liefert, die als Luftspalt entlang der Fassade verwendet werden.

10. Ein- oder zweischalige Außenfassadenverkleidungssystem nach Anspruch 1, **dadurch gekennzeichnet, dass** das System ein Luft-Erdwärmeüberträger (22) umfasst, das im Falle einer bodengestützten Ausführung ermöglicht, die Außenluft mit der Erdwärme zu erwärmen oder zu kühlen.

## Revendications

1. Système de revêtement de façade extérieure à simple ou double peau, comprenant :
• Une peau intérieure (1) utilisée comme entrefer le long de la façade,
• Dans la réalisation de double peau, une peau externe (2) est utilisée pour former un second entrefer,
• Un panneau mural intérieur (3) dans la section faisant face à l'environnement intérieur,
• Un panneau mural extérieur (4) dans la section faisant face à l'environnement extérieur,
• Dans la réalisation de double peau, un panneau intermédiaire (5) entre le panneau de la paroi intérieure (3) et le panneau de la paroi extérieure (4),
• Un profil horizontal (10) dans lequel un évent supérieur (6) et un évent inférieur (7) peuvent être situés,
• Un profilé vertical (11) supportant les panneaux de façade, ledit système de revêtement
**caractérisé en ce qu'**il comprend en outre:
• Un évent supérieur (6) qui est situé à l'intérieur du profil horizontal (10) sur la section supérieure du panneau mural intérieur (3) et qui peut être utilisé à des fins d'alimentation ou d'évacuation,
• Un évent inférieur (7) qui est situé à l'intérieur du profil horizontal (10) sur la section inférieur du panneau mural intérieur (3) et qui peut être utilisé à des fins d'alimentation ou d'évacuation,
• Un amortisseur d'évent (13) qui permet de réguler le débit de l'air d'alimentation (8) ou de l'air d'aspiration (9),
• Un système central de chauffage-refroidissement et de climatisation (14) vers lequel l'air d'alimentation (8) ou l'air d'aspiration (9) est transféré,
• Les conduits de ventilation (18) qui acheminent l'air d'alimentation (8) vers le système central de chauffage-refroidissement et de climatisation (14),
• Un amortisseur de régulation de l'air (19) qui régule le débit d'air dans un système central de chauffage-refroidissement et de climatisation (14), et
• Une boîte de jonction (20) qui relie les conduits de ventilation (18) à la peau intérieure (1) ou à la peau extérieure (2) de la façade.

2. Système de revêtement de façade extérieure à simple ou double peau selon la revendication 1, **caractérisé en ce que** le panneau de paroi extérieure (4) du mur rideau est un panneau de mur-rideau en verre, en double vitrage, en métal ou en matériau composite selon le mode d'application de l'invention.

3. Système de revêtement de façade extérieure à simple ou double peau selon la revendication 1, **caractérisé en ce que** le panneau de la paroi intérieure (3) du mur-rideau dans la section du système qui fait face à la paroi intérieure est en verre, en métal, en matériau composite selon le mode d'application de l'invention.

4. Système de revêtement de façade extérieure à simple ou double peau selon la revendication 1, **caractérisé en ce qu'**il comprend un panneau intermédiaire (5) qui peut être en métal, en verre ou en plastique et qui permet de séparer la paroi intérieure (1) de la peau extérieure (2), et donc l'air passant à travers la peau intérieure (1) de l'air passant à travers la peau extérieure (2).

5. Système de revêtement de façade extérieure à simple ou double peau selon la revendication 1, **caractérisé en ce que** l'évent inférieur (7) et l'évent supérieur (6) qui sont positionnés à l'intérieur du profil horizontal (10) sont pourvus ou non d'un amortisseur d'évent (13).

6. Système de revêtement de façade extérieure à simple ou double peau selon la revendication 1, **caractérisé en ce que** la peau simple est configurée de telle sorte que seulement l'air d'aspiration (9) ou l'air d'alimentation (8) sera présent dans la peau intérieure (1) en une rangée sur toute la façade.

7. Système de revêtement de façade extérieure à simple ou double peau selon la revendication 1, **caractérisé en ce que** la réalisation de double peau est configurée de telle sorte que l'air d'alimentation (8) sera présent dans la peau intérieure (1) tandis que l'air d'aspiration (9) sera présent dans la peau extérieure (2) dans une rangée de la façade.

8. Système de revêtement de façade extérieure à simple ou double peau selon la revendication 1, **caractérisé en ce que** le système est configuré de telle sorte que l'air d'aspiration (9) provenant d'une façade sera fourni à l'installation de climatisation (17) de l'autre façade au moyen des registres (19) afin de chauffer ou de refroidir l'air d'alimentation (8) de cette façade.

9. Système de revêtement de façade extérieure à simple ou double peau selon la revendication 1, **caractérisé en ce qu'**il comprend un système d'extinction d'incendie gazeux (26) qui, en cas d'incendie, fournit du gaz d'extinction ou des agents extincteurs dans la peau intérieure (1) et la peau extérieure (2) utilisée comme entrefer le long de la façade.

10. Système de revêtement de façade extérieure à simple ou double peau selon la revendication 1, **caractérisé en ce qu'**il comprend un système d'échangeur de chaleur sol-air (22) qui, dans le cas d'une incorporation au sol, permet de chauffer ou de refroidir l'air extérieur avec la chaleur souterraine.
